# EUROPEAN PATENT APPLICATION

(11) **EP 3 260 078 A1**
(43) Date of publication of application: **27.12.2017**
(21) Application number: 16382288.5
(22) Date of filing: 22.06.2016
(51) Int. Cl.: A61C 8/00

(54) **PROCESS FOR MANUFACTURING DENTAL CROWNS AND ASSOCIATED DENTAL CROWN**

(71) Applicant: Sanchez Gutierrez, Alvaro, 28044 Madrid (ES); Martin Alonso, Pedro, 28903 Madrid (ES); Calvente De Las Mulas, Tania, 28025 Madrid (ES)
(72) Inventor: Sanchez Gutierrez, Alvaro, 28044 Madrid (ES); Martin Alonso, Pedro, 28903 Madrid (ES); Calvente De Las Mulas, Tania, 28025 Madrid (ES)
(74) Representative: Pons

(57) **Abstract**

The present invention relates to a process for manufacturing dental crowns, which comprises a manufacturing step for a first dental crown subset (1), where the first dental crown subset (1) is designed to be coated with a ceramic coating, and a manufacturing step for a second dental crown subset, or an insert (2), where the second dental crown subset, or the insert (2), is designed to come in contact with a dental implant (3), and a step for attaching by pressure the first dental crown subset (1) and the second dental crown subset, or insert (2). The invention further relates to a dental crown manufactured by that process.

## Description

### OBJECT OF THE INVENTION

The present invention relates to a process for manufacturing dental crowns, which makes it possible to manufacture a dental crown with a reduced manufacturing time for the aforementioned crown.

The invention also relates to a dental crown that comprises a first dental crown subset, where the first dental crown subset is designed to be coated with a ceramic coating, and a second dental crown subset, or an insert, where the second dental crown subset, or the insert, is designed to come in contact with a dental implant.

### BACKGROUND OF THE INVENTION

In the first place, processes for manufacturing dental crowns have been disclosed in the prior art which are performed starting from a billet of the crown material, wherein the final shape of the crown is obtained by means of milling at a machining centre. In order to attach the crown to the implant, the attachment area requires a milling time ranging between 15 and 40 minutes, which increases the manufacturing time. Moreover, it is necessary to use several suitable milling tools for each type of attachment.

The machining of the attachment area is the most complex step in the manufacturing of the dental crown, since any error in said machining makes screwing of the crown to the implant impossible or defective.

These machining centres require high-precision milling machines, generally 5-axis machines, designed by means of a CAD-CAM programme, at a high cost, ranging between approximately € 100,000 and 400,000, since the production materials are difficult to machine due to their composition; consequently, a large investment is required for their implementation and maintenance, in addition to qualified labour to handle the milling machines.

In the second place, processes for manufacturing screw-retained dental crowns by means of sintering have also been disclosed. In this type of pieces, the attachments are not very precise, since the sintering does not have sufficient quality to respond to the limited tolerance required by the attachment.

In the third place, hybrid processes for manufacturing screw-retained dental crowns are also known, wherein the crown is printed (generally using SLM, sintering laser melting, technology), with expansions ranging between approximately 0.1 and 0.3 mm, in order to subsequently perform milling of the attachment area with a milling machine. The same disadvantages associated with the technique described in the preceding paragraph are also present in this second process.

In the fourth place, processes for manufacturing cast screw-retained dental crowns, which are waxed and cast by means of induction, are known. These processes entail many complications and the quality of the attachment area leaves much to be desired, since it is not very precise.

In the fifth place, processes for manufacturing pre-milled screw-retained dental crowns are known, but both the elaboration and the material are very costly; moreover, it is complicated to have a large production in order for it to be profitable.

The present invention resolves all the disadvantages described above, since it simplifies the crown manufacturing process, increases the number of pieces produced daily and allows for a reduction in the fleet of machines necessary to perform the dental crown manufacturing process.

### DESCRIPTION OF THE INVENTION

The present invention relates to a process for manufacturing dental crowns which makes it possible to manufacture a dental crown with a reduced manufacturing time for the aforementioned crown.

The process for manufacturing dental crowns is designed to manufacture a dental crown that may be attached to a dental implant.

The process for manufacturing dental crowns comprises:
- a step for manufacturing a first dental crown subset, where the first dental crown subset is designed to be coated with a ceramic coating,
- a step for manufacturing a second dental crown subset, or an insert, where the second dental crown subset, or the insert, is designed to come in contact with a dental implant.

The process further comprises a step for attaching by pressure the first dental crown subset and the second dental crown subset, or insert.

Thanks to the step for attaching by pressure, the first subset and the second subset, or insert, may be manufactured in two independent manufacturing steps. This allows for the manufacturing of the first subset and the second subset, or insert, using different techniques and/or materials, which reduces the manufacturing costs.

Preferably, the first subset is a Cr-Co alloy, since this is the best material for compatibility with a ceramic coating, which is what coats the anatomical part of the crown, due to its hardness, necessary for the functionality of the dental crown, and its good adhesion to the ceramic coating.

Also preferably, the second subset, or insert, is a titanium alloy.

Preferably, the manufacturing step for the first dental crown subset is performed by means of sintering.

Also preferably, the manufacturing step for the second dental crown subset, or insert, is performed by means of milling.

This makes is possible to separate the manufacturing process for the second dental crown subset, or insert, i.e. that part of the dental crown designed to come in contact with the dental implant, and the manufacturing process for the first dental crown subset, i.e. that part that is designed to be coated with the ceramic coating.

The step for attaching by pressure makes it possible to attach the first dental crown subset to the second dental crown subset, or insert, in situ, at the dental laboratory, on the basis of the needs arising from the type of dental implant available.

Preferably, the step for attaching by pressure is performed in a guided manner.

The invention also relates to a dental crown that comprises a first dental crown subset, where the first dental crown subset is designed to be coated with a ceramic coating, and a second dental crown subset, or an insert, where the second dental crown subset, or the insert, is designed to come in contact with a dental implant.

The first dental crown subset and the second dental crown subset, or insert are attachable by pressure.

Preferably, the first dental crown subset comprises an internal generatrix and the second dental crown subset, or insert, comprises an external generatrix, where the internal generatrix of the first subset and the external generatrix of the second subset, or insert, present the same angle with respect to a central axis of the dental crown.

Also preferably, the first internal generatrix and the second external generatrix are oblique with respect to the central axis of the dental crown.

Preferably, the first dental crown subset and/or the second dental crown subset, or insert, comprise guiding means, such that the attachment thereof by pressure is performed in a guided manner.

In this way, the second dental crown subset, or insert, made of a titanium alloy, since it is the most biocompatible material for the attachment area, which would be the part closest to the implant, improves the quality of the product, as it also does not comprise any type of chemical material because the second dental crown subset, or insert, is attached to the first subset by pressure.

The second dental crown subset, or insert, may be mass-produced in a production line, since it is always identical; this reduces the cost of the piece and its anatomical part, since it requires less precision.

Since the second dental crown subset, or insert, may be mass-produced in a production line because it is always identical, this significantly reduces the cost of the dental crown, and, since the first subset requires less precision, it may be manufactured by means of sintering; this reduces the cost and makes for much better adaptability to the user than any other manufacturing process.

This improves the quality of the dental crown thus obtained, using materials that are commonly used in the dental prosthesis sector and combining the effects of two materials which are difficult to attach; moreover, it reduces the manufacturing costs, by dividing the piece into two parts, such that the most delicate part, which requires greater precision, may be manufactured in a standard manner.

### BRIEF DESCRIPTION OF THE DRAWINGS

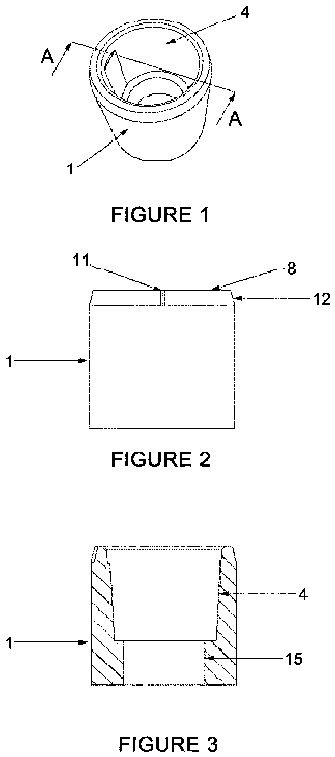

Figure 1 shows a perspective view of the first dental crown subset of the dental crown of the present invention.
Figure 2 shows a top view of Figure 1.
Figure 3 shows an AA cross-sectional view of Figure 1.

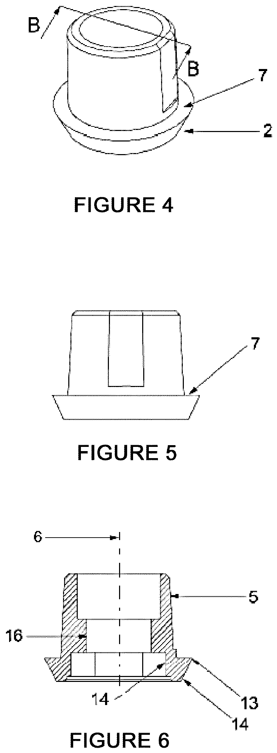

Figure 4 shows a perspective view of the second dental crown subset, or the insert, of the dental crown of the present invention.
Figure 5 shows a top view of Figure 4.
Figure 6 shows a BB cross-sectional view of Figure 5.

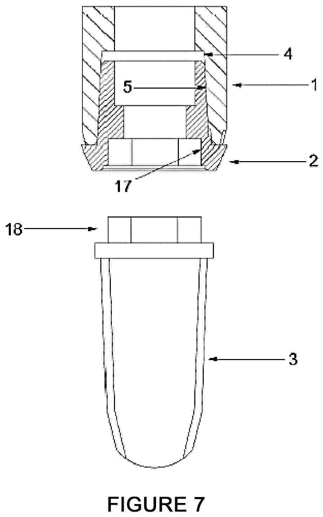

Figure 7 shows an overall cross-sectional view of the first dental crown subset and the second set of the dental crown, or insert, of the dental crown of the present invention after they have been attached by means of the manufacturing process of the present invention, and also shows a top view of the implant with which the second dental crown subset, or the insert, is designed to come in contact.
Figure 8 shows an image of the arrangement of the elements that form a part of the dental crown manufacturing process of the present invention, whereon a traction test is performed.
Figure 9 shows a graph of the traction test shown in Figure 8, which represents resistance to traction against lengthening.

### PREFERRED EMBODIMENT OF THE INVENTION

Below we will describe the dental crown manufacturing process of the present invention in detail.

The process for manufacturing dental crowns comprises:
- a manufacturing step for a first dental crown subset (1), where the first dental crown subset (1) is designed to be coated with a ceramic coating (not shown),
- a manufacturing step for a second dental crown subset, or an insert (2), where the second dental crown subset, or the insert (2), is designed to come in contact with a dental implant (3), and
- a step for attaching by pressure the first dental crown subset (1) and the second dental crown subset, or insert (2).

Prior to the step for attaching by pressure, the process comprises a step for positioning the first dental crown subset (1) and the second dental crown subset, or insert (2), using indicator means to determine the relative position between both (1, 2).

Optionally, the manufacturing step for the first dental crown subset (1) is performed by means of sintering, whereas the manufacturing step for the second dental crown subset, or insert (2), is performed by means of milling, turning or a combination of both, and it may be performed in a production line, with the substantial cost reduction that this entails.

In this way, the step for attaching by pressure makes it possible to attach the first dental crown subset and the second dental crown subset, or insert, in situ, at the dental laboratory, on the basis of the needs arising from the type of dental implant available.

Optionally, the step for attaching by pressure is performed in a guided manner.

The invention also relates to a dental crown that comprises a first dental crown subset (1), where the first dental crown subset (1) is designed to be coated with a ceramic coating (not shown), and a second dental crown subset, or an insert (2), where the second dental crown subset, or the insert (2), is designed to come in contact with a dental implant (3), and wherein the first dental crown subset (1) and the second dental crown subset, or insert (2), may be attached by pressure.

The first dental crown subset (1) comprises an internal generatrix (4) and the second dental crown subset, or insert (2), comprises an external generatrix (5), where the internal generatrix (4) of the first dental crown subset (1) and the external generatrix (5) of the second dental crown subset, or insert (2), present the same angle with respect to a central axis (6) of the dental crown.

In this embodiment, the angle formed by the first internal generatrix (4) and the second external generatrix (5) with respect to the central axis (6) of the dental crown ranges between [1°, 5°], and it is preferably 3°.

In this embodiment, the second dental crown subset, or insert (2), comprises a flange (7) designed to support an external surface (8) of the first dental crown subset (1).

The first dental crown subset (1) and the second dental crown subset, or insert (2), comprise guiding means; in this embodiment, the guiding means are a bevel (9) present in the second dental crown subset, or insert (2), antagonistic towards an internal shoulder (10) present in the first dental crown subset (1), such that the attachment thereof by pressure is performed in a guided manner.

In this embodiment, the first dental crown subset (1) and the second dental crown subset, or insert (2), comprise indicator means of the position for the attachment between them, these indicator means preferably are a first indicator (11) present in an external surface (12) of the first dental crown subset (1), which is designed to face a second indicator (13) present in an external surface (14) of the second dental crown subset, or insert (2), such that the position prior to the attachment thereof (1, 2) is defined.

The first dental crown subset (1) comprises a first opening (15) designed for the passage of attachment means (not shown) between the dental crown and the dental implant (3), this first opening (15) being in line with a second opening (16) of the second dental crown subset, or insert (2), designed for the passage of said attachment means.

The second dental crown subset, or insert (2), comprises a first geometry (17), which is antagonistic towards a second geometry (18) present in the dental implant (3), such that contact between the second dental crown subset, or insert (2), and the dental implant (3) takes place through the first geometry (17) and the second geometry (18).

Preferably, the first subset (1) is a Cr-Co alloy.

Also preferably, the second subset, or insert (2), is a titanium alloy.

### EXAMPLE

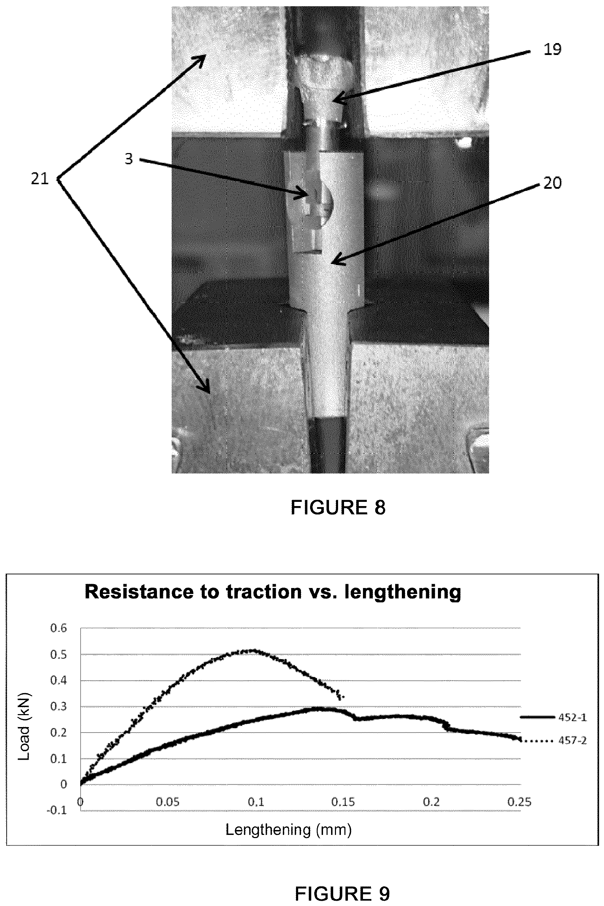

The holder performed traction tests on sintered dental implants (3) at the facilities of the Department of Mechanics of Continuous Media and Theory of Structures of the Carlos III University in Madrid, in order to perform the step for attaching by pressure the first dental crown subset (1) and the second dental crown subset, or insert (2); this cannot be observed in Figure 8, since it is hidden by the sintered dental crown (19).

In order to determine the maximum resistance to traction of the set formed by the sintered dental crown (19) mounted on a dental anchor bolt (20), the set is subjected to uniaxial traction in a universal testing machine (under positioning control) at a constant travelling speed (quasi-static regime), to obtain a record of the applied load as a function of time.

The resistance to traction of the material is determined on the basis of the maximum load achieved during the test.

In order to perform the tests, an INSTRON 8516 Universal Testing Machine, with a load cell of up to 5 kN, was used.

An anchor bolt is mounted on a cylinder especially designed for this purpose, which allows for the positioning and vertical alignment of the set, and for firm fastening of said anchor (see Figure 8).

Both the cylinder described and the dental crown, which are aligned with the main axis of the machine, are firmly fastened to the equipment by means of adjustable-pressure hydraulic clamps (21) that make it possible to apply the traction load without any slipping, by means of a relative splitting motion between the clamps (21) of 0.1 mm/min, until failure of the set (detectable through a significant reduction in the load).

The resistance to traction of the set is directly determined as the maximum load detected prior to failure.

The following results were obtained from the tests:

| **No.** | **MATERIAL** | **SPEED** | **MAXIMUM LOAD (kN)** |
|---|---|---|---|
| **TEST_2** | 452 | 0.1 mm/min | 0.294 |
| **TEST_3** | 457 | 0.1 mm/min | 0.519 |

which are shown on the graph of Figure 9.

## Claims

1. Process for manufacturing dental crowns, which comprises:
• a manufacturing step for a first dental crown subset (1), where the first dental crown subset (1) is designed to be coated with a ceramic coating, and
• a manufacturing step for a second dental crown subset, or an insert (2), where the second dental crown subset, or the insert (2), is designed to come in contact with a dental implant (3),
**characterised in that** it further comprises:
• a step for attaching by pressure the first dental crown subset (1) and the second dental crown subset, or insert (2).

2. Process for manufacturing dental crowns according to claim 1, wherein, prior to the step for attaching by pressure, the process comprises a step designed to position the first dental crown subset (1) and the second dental crown subset, or insert (2), performed using indicator means for the relative position between both (1, 2).

3. Process for manufacturing dental crowns according to any of the preceding claims, wherein the manufacturing step for the first dental crown subset (1) is performed by means of sintering.

4. Process for manufacturing dental crowns according to any of the preceding claims, wherein the manufacturing step for the second dental crown subset, or insert (2), is performed by means of milling, turning or a combination of both.

5. Process for manufacturing dental crowns according to any of the preceding claims, wherein the step for attaching by pressure is performed in a guided manner.

6. Dental crown that comprises a first dental crown subset (1), where the first dental crown subset (1) is designed to be coated with a ceramic coating, and a second dental crown subset, or an insert (2), where the second dental crown subset, or the insert (2), is designed to come in contact with a dental implant (3), and wherein the first dental crown subset (1) and the second dental crown subset, or insert (2) are attachable by pressure.

7. Dental crown according to claim 6, wherein the first dental crown subset (1) comprises an internal generatrix (4) and the second dental crown subset, or insert (2), comprises an external generatrix (5), and wherein the internal generatrix (4) of the first dental crown subset (1) and the external generatrix (5) of the second dental crown subset, or insert (2), present the same angle with respect to a central axis (6) of the dental crown.

8. Dental crown according to claim 7, wherein the first internal generatrix (4) and the second external generatrix (5) are oblique with respect to the central axis of the dental crown.

9. Dental crown according to claim 7, wherein the angle formed by the first internal generatrix (4) and the second external generatrix (5) with respect to the central axis (6) of the dental crown ranges between [1°, 5°], and is preferably 3°.

10. Dental crown according to any of claims 6 to 9, wherein the second dental crown subset, or insert (2), comprises a flange (7) designed to support an external surface (8) of the first dental crown subset (1).

11. Dental crown according to any of claims 6 to 10, wherein the first dental crown subset (1) and the second dental crown subset, or insert (2), comprise guiding means.

12. Dental crown according to claim 11, wherein the guiding means are a bevel (9) present in the second dental crown subset, or insert (2), which is antagonistic towards an internal shoulder (10) present in the first dental crown subset (1).

13. Dental crown according to any of claims 6 to 12, wherein the first dental crown subset (1) and the second dental crown subset, or insert (2), comprise indicator means for the attachment position between them.

14. Dental crown according to claim 13, wherein the indicator means for the attachment position between both subsets include a first indicator (11) present in an external surface (12) of the first dental crown subset (1), which is designed to face a second indicator (13) present in an external surface (14) of the second dental crown subset, or insert (2).

15. Dental crown according to any of claims 6 to 14, wherein the first dental crown subset (1) comprises a first opening (15) designed for the passage of attachment means between the dental crown and the dental implant (3), this first opening (15) being in line with a second opening (16) of the second dental crown subset, or insert (2), designed for the passage of said attachment means.

16. Dental crown according to any of claims 6 to 15, wherein the second dental crown subset, or insert (2), comprises a first geometry (17), which is antagonistic towards a second geometry (18) present in the dental implant (3), and wherein contact between the second dental crown subset, or insert (2), and the dental implant (3) takes place through the first geometry (17) and the second geometry (18).

17. Dental crown according to any of claims 6 to 16, wherein the first subset (1) is a Cr-Co alloy.

18. Dental crown according to any of claims 6 to 17, wherein the second subset, or insert (2), is a titanium alloy.
